# EUROPÄISCHE PATENTSCHRIFT

(11) **EP 2 509 176 B1**
(45) Veröffentlichungstag und Bekanntmachung des Hinweises auf die Patenterteilung: **26.08.2015**
(21) Anmeldenummer: 12001658.9
(22) Anmeldetag: 08.03.2012
(51) Int. Cl.: H02G 3/04, H02G 3/12

(54) **Montagesystem zur Verschiebesicherung und Schnittkaschierung von Oberteilen und Elektroinstallationsgeräten bei Leitungsführungskanälen**
Assembly system for preventing movement and section lamination of top parts and and electronic installation devices of wiring channels
Système de montage pour sécurisation contre le déplacement et le contrecollage de parties supérieures et d'appareils d'installation électrique dans des canaux de câblage

(30) Priorität: 08.04.2011 DE 202011005060 U
(43) Veröffentlichungstag der Anmeldung: 10.10.2012
(73) Patentinhaber: Tehalit GmbH, 67716 Heltersberg (DE)
(72) Erfinder: Eberle, Patrick, 66292 Riegelsberg (DE)
(74) Vertreter: Nuss, Laurent

(56) Entgegenhaltungen:
- EP-A1- 0 844 714
- EP-A1- 1 229 625
- EP-A1- 2 079 138
- DE-U1-202009 009 353

## Beschreibung

Die vorliegende Erfindung betrifft ein Montagesystem zur Verschiebesicherung und Schnittkaschierung von Oberteilen und Elektroinstallationsgeräten bei Leitungsführungskanälen.

Leitungsführungskanäle, wie z.B. Kabelkanäle oder Installationskanäle, bestehen aus einem Unterteil und einem Oberteil. Beim Verlegen von Leitungsführungskanälen entstehen bei aneinander stoßenden Kabelkanalabschnitten unschöne Schnittkanten im Übergangsbereich, die mittels spezieller Schnittkaschierungen abgedeckt werden. Auch beim Einbau von Elektroinstallationsgeräten entstehen im Übergangsbereich solche Schlitze bei den Stoßflächen, die ebenfalls mit Blenden oder Abdeckungen kaschiert werden müssen. Im Bereich der Kabelkanäle existieren unterschiedliche Lösungen, um Schnittkanten aufeinander stoßender Kabelkanalabschnitte oder im Übergangsbereich zwischen Oberteilen/Oberteil-Elektroinstallationsgeräten zu kaschieren. In der DE 20 2009 009 498 U1 bzw. EP 2 273 638 A1 ist z.B. eine Klammer für Kabelkanäle zur Schnittkaschierung von Schnittkanten aufeinander stoßender Kabelkanalabschnitte und/oder deren Enden beschrieben. Die Klammer besteht aus einer leistenförmigen Frontblende sowie einer separaten Seitenblende. Die Blende ist für die Schnittkaschierung des Kanalunterteils einschließlich der Seitenteile konstruiert.

Ein herkömmliches Montagesystem ist in EP 0844 714 A1 offenbart.

In der DE 20 2008 014 724 U1 wird ein Kupplungselement zur Verbindung zweier Kabelkanalabschnitte beschrieben. Auch hier erfolgt die Verbindung des Kanalunterteils. Eine getrennte Verschiebesicherung oder Schnittkaschierung von Oberteilelementen/ Elektroinstallationsgeräten ist nicht vorgesehen.

In der DE 101 12 700 B4 wird ein Formteil zum Verbinden von zwei oder mehr Abschnitten eines Kabelkanals beschrieben. Das darin beschriebene Formteil soll einen Kabelkanal mit einem asymmetrischen Querschnitt verbinden und Stoßkanten kaschieren.

Ein Montageelement zur Schnittkaschierung eines Oberteils ist in der DE 20 2007 006 989 U1 beschrieben. Das Element zur Oberteilkaschierung besteht aus einem Blendenkörper und zwei am Kopf- und Fußende nach unten geneigten seitlichen Schenkeln, die mit dem Blendenkörper ein U-Profil bilden. An der Unterseite des Blendenkörpers ist ein Bügel mit zwei seitlich nach unten geneigten Armen ausgeformt, an deren Enden sich jeweils ein Hakenprofil befindet. Auf diese Weise können aufeinander stoßende Oberteile im Bereich der Stoßkante kaschiert werden. Dieser Blendenkörper besitzt einen vordefinierten Überlappungsbereich. Beim Einbau von Elektroinstallationsgeräten in einen Leitungsführungskanal ist es erforderlich, dass das Oberteil mit der Blende des Elektroinstallationsgerätes optisch ansprechend abschließt. Dabei sind in vielen Montagesituationen unterschiedliche Überlappungsabstände erforderlich, je nachdem, ob aufeinander stoßende Oberteile oder ein auf ein Elektroinstallationsgerät stoßendes Oberteil kaschiert werden müssen/muss. Bislang mussten für diese beiden Anwendungsbereiche zwei unterschiedlich ausgeführte Kaschierungselemente vom Monteur mitgenommen und installiert werden. Alternativ gibt es die vorhandenen "Allround"-Lösungen, die jedoch den Kundenwünschen und Anforderungen nicht immer entsprechen. Ferner ist es erforderlich, dass die Oberteilelemente nicht mehr verschiebbar sind. Die genannten Lösungen stellen dies nicht im erwünschten Maße sicher.

Vor diesem Hintergrund ist es Aufgabe der vorliegenden Erfindung, ein verbessertes Montagesystem zur Verschiebesicherung und Schnittkaschierung von Oberteilen und/oder Elektroinstallationsgeräten anzugeben, bei dem mit einem einzigen Bauteilsatz sowohl Stoßkanten beim Übergang eines Oberteils auf ein Elektroinstallationsgerät als auch zwischen zwei Oberteilen kaschiert und zugleich eine Verschiebesicherung erzielt werden können.

Diese Aufgabe wird gelöst durch ein Montagesystem mit den Merkmalen des Anspruchs 1.

Das erfindungsgemäße Montagesystem besteht aus zwei Einzelteilen: einer Klammer mit einem Grundkörper sowie seitlichen Halteleisten zum Aufrasten auf ein Kanalunterteil und seitlichen Klemmschenkeln zur Befestigung einer Blende. Ferner besteht es aus einer Blende mit einer Deckplatte und seitlichen, gegenüberliegend angeordneten Verriegelungsrippen, die mit den Klemmschenkeln des Grundkörpers der Klammer kooperieren. Erfindungsgemäß sind am Grundkörper parallel zueinander beabstandete Schlitze zur Aufnahme der Verriegelungsrippen in zwei unterschiedlichen Verriegelungspositionen ausgebildet.

Vorzugsweise besteht der Grundkörper aus drei parallel zueinander angeordneten Schlitzen, die jeweils zwei gegenüberliegend angeordnete Durchtrittsöffnungen für die einzelnen Verriegelungsrippen besitzen. Vorzugsweise sind an der Unterseite der Deckplatte zwei Verriegelungsrippen parallel zueinander angeordnet. Die Anordnung der Verriegelungsrippen an der Blende ist leicht asymmetrisch, so dass stirnseitig auf der einen Seite der Deckplatte ein größerer Überhang und auf der gegenüberliegenden Seite ein kleinerer Überhang entsteht. Jeweils ein Verriegelungsrippenpaar greift in einen Schlitz, so dass bei dieser Ausführungsform immer zwei Schlitze für eine Verriegelungsposition belegt werden. Je nachdem, welche Schlitze belegt werden, entstehen unterschiedliche Verriegelungspositionen für den erwünschten Zweck.

Die beiden Verriegelungspositionen sind für zwei Montagesituationen erforderlich. In einer ersten Verriegelungsposition werden die Schnittkanten aufeinander stoßender Oberteilelemente kaschiert. Durch die Wahl der Position der Blende gegenüber der Klammer erreicht man in dieser Verriegelungsposition, dass die Überhänge der Deckplatte der Blende beidseitig mit demselben Abstand an den aufeinander stoßenden Oberteilen überlappen (z.B. 5 mm).

In der zweiten Verriegelungsposition sind die Überlappungsbereiche an den beiden Blendenseiten unterschiedlich groß ausgebildet, was mit der asymmetrischen Anordnung der Verriegelungsrippen an der Unterseite der Deckplatte zusammenhängt. In dieser Montageposition ist der Abstand des Überhangs auf der einen Seite doppelt so groß wie auf der anderen Seite (z.B. 10 mm gegenüber 5 mm). Diese Verriegelungsposition wird beispielsweise verwendet, um die Stoßkante eines Oberteils zu einem Elektroinstallationsgerät zu kaschieren, da hierfür unterschiedliche Abstände notwendig sind, um den erwünschten optischen Effekt zu erzielen.

Neben der Funktion als Schnittkaschierung erfüllt das erfindungsgemäße Montagesystem auch die Funktion einer Verschiebe- bzw. Verrutschsicherung. Dies wird erreicht, indem am unteren Ende der Verriegelungsrippen der Blende eine nach außen weisende Kerbe ausgebildet ist und an der Unterseite des Klemmschenkels der Klammer ein Verriegelungsprofil ausgebildet ist, das in die Kerbe verrastet. Beim Herunterdrücken der Blende mit den Verriegelungsrippen werden die Verriegelungsrippen an den Klemmschenkeln entlang nach unten gedrückt. In einer Vormontageposition liegt ein Schenkelteil des Klemmschenkels auf der Kerbe auf und hält dadurch die Blende gegenüber der Klammer in Position. Ist die endgültige Montageposition erreicht, so wird die Blende von oben nach unten gedrückt, wodurch die Klemmschenkel nach außen geneigt werden, so dass das Verriegelungsprofil am Ende des Klemmschenkels in die Kerbe gedrückt wird. Auf diese Weise ist die Blende fest mit der Klammer verrastet. Vorzugsweise ist der Klemmschenkel federnd ausgebildet, um diese Funktion zu erleichtern.

An der Unterseite der Deckplatte der Blende sind die Verriegelungsrippen vorzugsweise über einen Steg miteinander verbunden.

Vorzugsweise ist in den Schlitzen des Grundkörpers der Klammer für jede einzelne Verriegelungsrippe eine eigene Durchtrittsöffnung ausgebildet. Die Durchtrittsöffnungen in den Schlitzen des Grundkörpers sind vorzugsweise von Stützrippen und einem Quersteg voneinander begrenzt. Dadurch kann jede einzelne Führungsrippe der beiden Verriegelungsrippenpaare in eine eigene Durchtrittsöffnung greifen.

Zur besseren Führung in der Klammer sind die Verriegelungsrippen der Blende zur Innenseite vorzugsweise abgerundet.

Zur Befestigung der Klammer an ein Kanalunterteil bilden die Klemmschenkel und das Halteprofil der Klammer einen Aufnahmebereich, der beispielsweise mit den Oberteilhalteprofilen des Kanalunterteils kooperiert und so für einen sicheren Halt der Klammer an dem Kanalunterteil sorgt.

Um die einzelnen Arretierungsfunktionen zu erfüllen, sind die seitlichen Klemmschenkel der Klammer vorzugsweise zackenförmig ausgestaltet.

Der erfindungsgemäße Aufbau der Klammer mit einem Grundkörper parallel von zueinander beabstandeten Schlitzen sowie die erfindungsgemäße Blende mit den daran angeordneten Verriegelungsrippen ermöglicht es, zwei unterschiedlichen Montagesituationen mit zwei getrennten Bauteilen gerecht zu werden, wo bislang unterschiedliche Bauteile oder Bausätze als Montagelemente erforderlich waren. Die beiden Verriegelungspositionen ermöglichen an den beiden Stirnseiten entweder einen symmetrischen Überhang oder einen asymmetrischen Überhang, bei dem auf der einen Stirnseite der Überhang größer ist (vorzugsweise doppelt so groß) als auf der gegenüberliegenden Stirnseite.

Die Erfindung wird in den nachfolgenden Zeichnungen näher erläutert. Es zeigen
- Fig. 1: eine isometrische Darstellung des erfindungsgemäßen Montagesystems, bestehend aus Klemmer und Blende,
- Fig. 2: eine Frontansicht des erfindungsgemäßen Montagesystems,
- Fig. 3: eine isometrische Darstellung der Einzelkomponenten des Montagesystems samt Zusammenbau,
- Fig. 4: einen Leitungsführungskanal mit zwei Montagesituationen für das erfindungsgemäße Montagesystem.

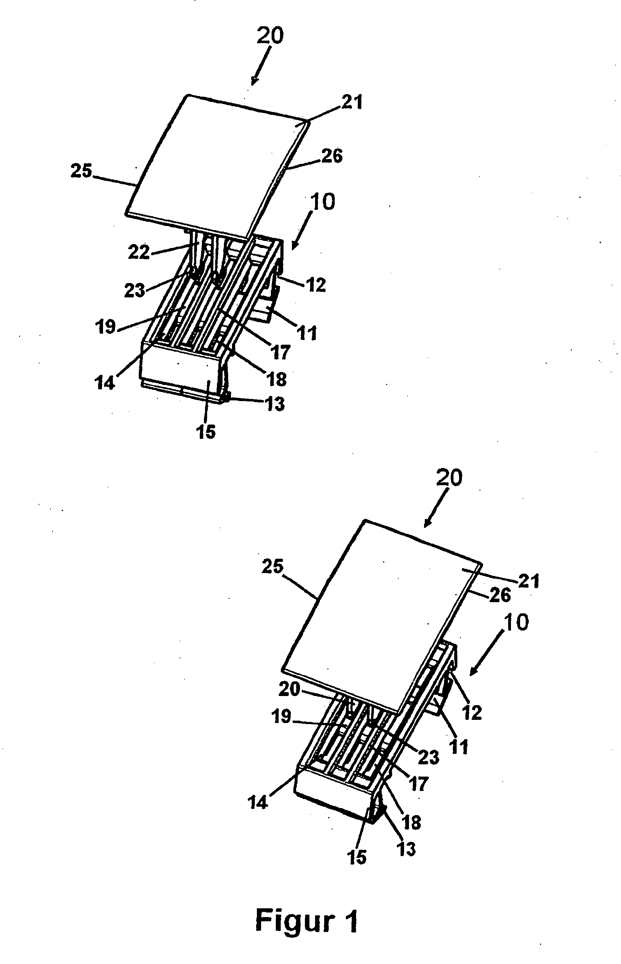

In Fig. 1 sind die beiden Bauteile des erfindungsgemäßen Montagesystems gezeigt. Man erkennt eine Klammer 10 sowie eine Blende 20. Die Klammer 10 besteht aus zwei sich gegenüberliegenden seitlichen Klemmschenkeln 22, die vorzugsweise federnd ausgebildet sind. Zur Montage der Klammer 10 auf ein Kanalunterteil 30 sind Halteleisten 15 vorgesehen. Die Halteleisten 15 bilden mit der Außenseite der Klemmschenkel 11 einen Aufnahmebereich 12 für ein Oberteilhalteprofil des Kanalunterteils 30.

Im Grundkörper 16 der Klammer 10 befinden sich drei parallel zueinander beabstandete Schlitze 14, die von Stützrippen 17 voneinander getrennt sind. Der Grundkörper 16 wird über einen Quersteg 19 zusätzlich stabilisiert.

Die Blende 20 besteht aus einer Deckplatte 21, die nach erfolgter Montage von außen sichtbar ist. An der Unterseite der Deckplatte 21 sind Veniegelungsrippen 22 ausgebildet. Bei der gezeigten Blende 20 sind jeweils zwei Verriegelungsrippenpaare asymmetrisch an der Unterseite der Deckplatte 21 angeordnet. Dadurch entsteht ein leicht versetzter Überlappungsbereich der Deckplatte 21, wodurch der Überlappungsbereich 25 auf der einen Stirnseite der Blende 20 größer ist als der Überlappungsbereich 26 auf der gegenüberliegenden Stirnseite der Blende 20.

In den Schlitzen 14 der Klammer 10 befinden sich Durchtrittsöffnungen 18, in welche die Verriegelungsrippen 22 greifen. Beim Aufsetzen der Blende 20 auf die Klammer 10 gleiten die Verriegelungsrippen 22 durch die Durchtrittsöffnungen 18 am Klemmschenkel 14 entlang, bis sie schließlich mit einem am Ende des Klemmschenkels 11 ausgebildeten Verriegelungsprofil 13 verrasten. Erreicht wird dies mittels einer am Ende jeder Verriegelungsrippe 22 ausgebildeten Kerbe 23.

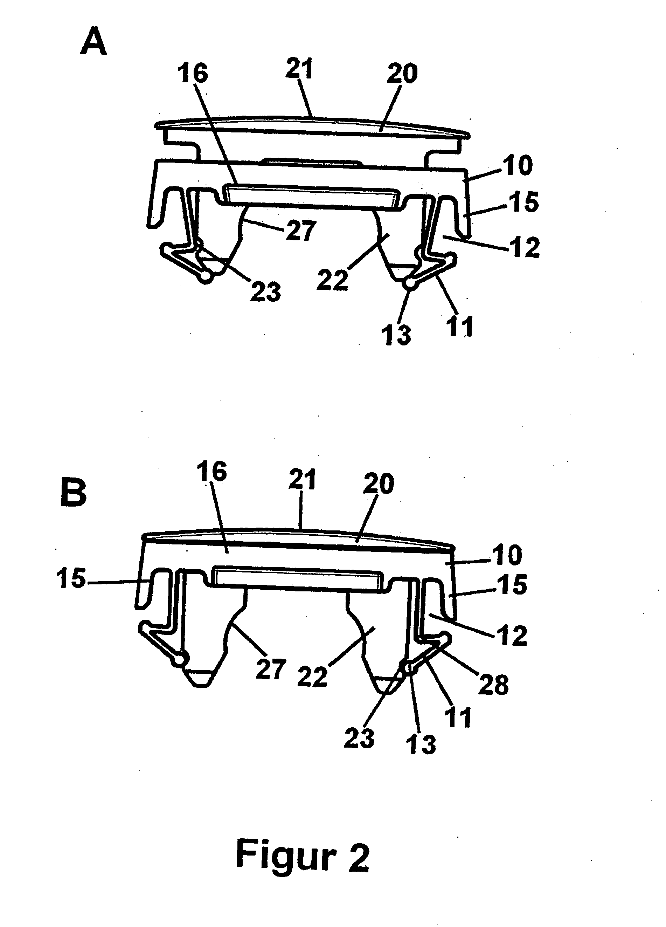

In Fig. 2 sind die Zusammenwirkung und Funktion der Blende und der Klammer 10 von der Seite gezeigt. Die Blende 20 wird von oben über die Schlitze 14 und die darin ausgebildeten Durchtrittsöffnungen 18 auf die Klammer 10 aufgesetzt und nach unten gedrückt. Die Verriegelungsrippen 22 gleiten entlang der federnden Klemmschenkel 11 nach unten. In der Vormontagesituation (Fig. 2A) sitzen die Enden der Verriegelungsrippen 22 auf das Ende des Klemmschenkels 11 auf. Ein Schenkelteil des Klemmschenkels 11 lagert in der Kerbe 23. Dadurch wird die Blende 20 an der Klammer 10 gehalten, kann aber noch entlang des Kanalunterteils 30 verschoben werden.

Zum Erreichen der endgültigen Verriegelungsposition und damit Montageendposition wird die Blende 20 vollständig auf die Klammer 10 aufgedrückt. Hierbei gleiten die Verriegelungsrippen 22 nach unten, bis das Verriegelungsprofil 13 am Ende des Klemmschenkels 11 in die Kerbe 23 gleitet und die Blende 20 dadurch mit der Klammer 10 verrastet. Die Innenseiten der Verriegelungsrippen 22 sind vorzugsweise abgerundet, damit die Verriegelungsrippen 22 einfacher durch die Durchtrittsöffnungen 18 der Schlitze 14 der Klammer 10 gleiten können. Zum Verklemmen der Klammer 10 mit dem Kanalunterteil 30 bilden die Halteleiste 15 und die Außenseite des Klemmschenkels 11 einen Aufnahmebereich 12. In diesen Aufnahmebereich 12 kann ein entsprechendes Oberteilhalteprofil des Kanalunterteils 30 greifen und die Klammer 10 dadurch halten.

Der Klemmschenkel 11 ist vorzugsweise zackenförmig und vorzugsweise federnd ausgebildet. Wie in der Situation der 2A zu erkennen, sind die beiden Klemmschenkel 11 leicht nach innen geneigt. Erst beim Herunterdrücken der Blende 20 auf die Klammer 10 werden die beiden Klemmschenkel 11 entgegen der nach innen wirkenden Federkraft nach außen gedrückt, so dass das Verriegelungsprofil 13 in die Kerbe 23 gleitet und die Blende 20 dadurch mit der Klammer 10 verrastet (Fig. 2B).

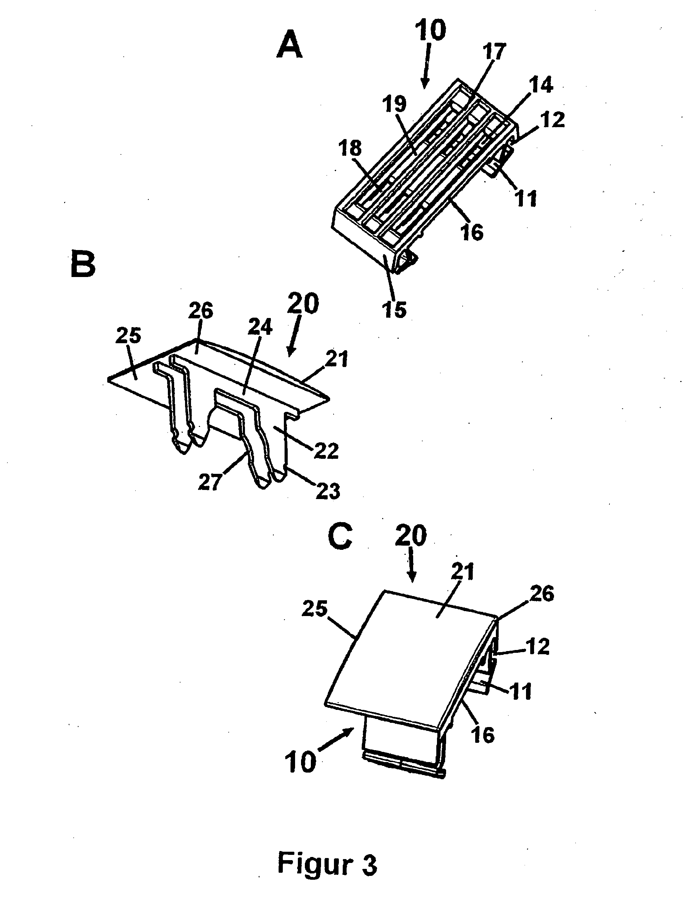

In Fig. 3 sind die Einzelkomponenten des erfindungsgemäßen Montagesystems in deren Einzelansicht sowie im Zusammenbau gezeigt. Fig. 3A zeigt den Aufbau der Klammer 10 mit deren Grundkörper 16 und den darin eingearbeiteten Schlitzen 14, welche parallel zueinander beabstandet sind. In den Schlitzen 14 befinden sich die Durchtrittsöffnungen 18 für die Verriegelungsrippen 22 der Blende 20. Ein Quersteg 19 stabilisiert die Klammer 10. Die Schlitze 14 werden von Stützrippen 17 voneinander getrennt. Die Halteleiste 15 und die Außenseite der Klemmschenkel 11 bilden den Aufnahmebereich 12 zur Befestigung der Klammer 10 an ein Kanalunterteil 30.

In Fig. 3B ist die Blende 20 von unten gezeigt. An der Unterseite der Deckplatte 21 erkennt man zwei Verriegelungsrippenpaare. Jeweils zwei Verriegelungsrippen 22 sind gegenüberliegend angeordnet. Die Innenseiten 27 der Verriegelungsrippen 22 sind abgerundet. An der Außenseite und am Ende jeder Verriegelungsrippe 22 befindet sich die Kerbe 23, die zur Verrastung mit der Klammer 10 erforderlich ist. Die Verriegelungsrippen 22 sind asymmetrisch an der Unterseite der Deckplatte 21 angeordnet. Dadurch entsteht auf einer Stirnseite ein größerer Überhang 25 als der Überhang 26 auf der gegenüberliegenden Stirnseite. In der gezeigten Ausführungsform ist der Überhang 25 in etwa doppelt so groß wie der Überhang 26. Die unterschiedlich großen Überhänge 25, 26 sind für die erwünschten beiden Verrieglungspositionen erforderlich. Die beiden Verriegelungspositionen ermöglichen die zwei erwünschten unterschiedlichen Montagepositionen des erfindungsgemäßen Montagesystems.

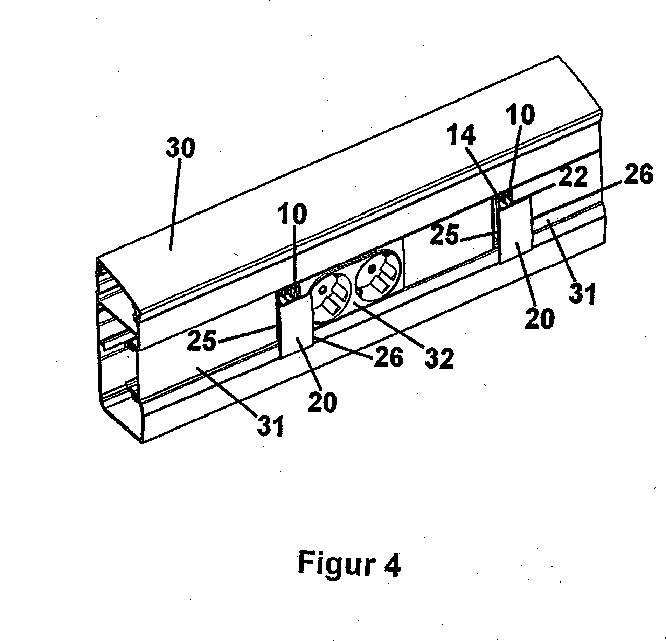

In Fig. 3C ist der Zusammenbau der Blende 20 mit der Klammer 10 in einer Montageposition gezeigt. Deutlich erkennbar ist, dass der Überhang 25 auf einer Seite größer ausfällt als der Überhang 26 auf der gegenüberliegenden Stirnseite. In Fig. 4 sind schließlich die beiden unterschiedlichen Montagesituationen bei einem Leitungsführungskanal gezeigt. Ein auf ein Kanalunterteil 30 aufgesetztes Oberteil 31 stößt an ein Elektroinstallationsgerät 32 an. Zur Vermeidung von Stoßkanten und unschönen Schnittkanten wird zuerst die Klammer 10 auf das Kanalunterteil 30 aufgerastet und anschließend die Blende 20 in die Klammer 10 eingerastet. Die Überlappung des Blendenkörpers ist so gewählt, dass der Überhang 25 auf der zum Oberteil 31 zugewandten Seite größer ist als der Überhang 26 auf der dem Elektroinstallationsgerät zugewandten Seite.

Bei der zweiten Montagesituation stoßen zwei Oberteilelemente 31 aufeinander. Bei dieser Montageposition sollen die Überhänge 25, 26 an den Stirnseiten beidseitig gleich sein. Erreicht wird dies dadurch, dass die Blende 20 nun nach außen versetzt in die Klammer 10 eingerastet wird. Die der Stirnseite 25 zugewandten Verriegelungsrippen 22 greifen bei der ersten Montageposition (Oberteil-Elektroinstallationsgerät) in den äußersten Schlitz der Klammer 10, während dieselben Verriegelungsrippen 22 bei der zweiten Montageposition in den mittleren Schlitz 14 der Klammer 10 greifen. Durch die versetzte Anordnung der Blende 20 gegenüber der Klammer 10 und der asymmetrischen Anordnung der Verriegelungsrippen 22 erreicht man in der zweiten Montageposition (Oberteil - Oberteil) einen gleichen Überhang 25, 26 zu den beiden Oberteilen 31.

Das erfindungsgemäße Montagesystem ermöglicht es somit, zwei unterschiedlichen Montagesituationen gerecht zu werden, bei denen unterschiedlich große Überhänge der Blende erforderlich sind. Erreicht wird dies durch den erfindungsgemäßen asymmetrischen Aufbau, mit dem unterschiedlich große Überhänge 25, 26 an den Stirnseiten der Blende 20 und somit Einbauten möglich sind.

Das erfindungsgemäße Montagesystem erzielt nicht nur eine Schnittkaschierung aufeinander treffender Oberteile 31 oder eines Oberteils 31 und eines Elektroinstallationsgerätes 32, sondern auch eine Verschiebesicherung des Oberteils 31 bzw. des Elektroinstallationsgerätes 32. Ist die Blende 20 fest mit der Klammer 10 verrastet, so lässt sich das Montageelement nicht mehr verschieben, d.h. das Elektroinstallationsgerät 32 oder das Oberteil 31 ist an dem Kanalunterteil 30 fixiert.

In der Vormontagesituation (vgl. Fig. 2A) ist es möglich, das Montagesystem entlang des Kanalunterteils 30 in die gewünschte Montageposition zu verschieben. Ist die endgültige Montageposition erreicht, wird die Blende 20 auf die Klammer 10 eingerastet und dadurch fest mit dem Kanalunterteil 30 arretiert. Somit erreicht man mit dem erfindungsgemäßen Montagesystem mehrere Funktionen. Ein ganz besonderer Vorteil liegt in der einfachen Handhabung und in der Tatsache, dass lediglich zwei Montageelemente, nämlich Klammer 10 und Blende 20, erforderlich sind. Dies erleichtert die Montage und die Handhabung gegenüber den bekannten Lösungen wesentlich.

## Patentansprüche

1. Montagesystem zur Verschiebesicherung und Schnittkaschierung von Oberteilen (31) und Elektroinstallationsgeräten (32) bei Leitungsführungskanälen, bestehend aus
- einer Klammer (10) mit einem Grundkörper (16), seitlichen Halteleisten (15) zum Aufrasten auf ein Kanalunterteil (30) und seitlichen Klemmschenkeln (11) zur Befestigung einer Blende (20),
- einer Blende (20) mit einer Deckplatte (21) und seitlichen gegenüberliegend angeordneten Verriegelungsrippen (22), die mit den Klemmschenkeln (11) des Grundkörpers (16) der Klammer (10) kooperieren, wobei am Grundkörper (16) wenigstens zwei parallel zueinander beabstandete Schlitze (14) zur Aufnahme der Verriegelungsrippen (22) in zwei unterschiedlichen Verriegelungspositionen ausgebildet sind, die von Stützrippen (17) voneinander getrennt sind, **dadurch gekennzeichnet, dass** am unteren Ende der Verriegelungsrippen (22) der Blende (20) eine nach außen weisende Kerbe (23) ausgebildet ist und an der Unterseite des Klemmschenkels (11) der Klammer (10) ein Verriegelungsprofil (13) ausgebildet ist, das in die Kerbe (23) verrastbar ist, dass die Verriegelungsrippen (22) der Blende (20) an der Unterseite der Deckplatte (21) versetzt angeordnet sind, wodurch stirnseitig auf der einen Seite ein größerer Überhang (25) und auf der gegenüberliegenden Seite ein kleinerer Überhang (26) entsteht und **dadurch gekennzeichnet, dass** die seitlichen Klemmschenkel (11) der Klammer (10) federnd ausgestaltet sind.

2. Montagesystem nach Anspruch 1, **dadurch gekennzeichnet, dass** die Verriegelungsrippen (22) an der Unterseite der Deckplatte (21) der Blende (20) über einen Steg (24) miteinander verbunden sind.

3. Montagesystem nach einem der vorhergehenden Ansprüche, **dadurch gekennzeichnet, dass** an dem Grundkörper (16) der Klammer (10) drei parallel zueinander beabstandete Schlitze (14) angeordnet sind, die von Stützrippen (17) voneinander getrennt sind.

4. Montagesystem nach einem der vorhergehenden Ansprüche, **dadurch gekennzeichnet, dass** in den Schlitzen (14) des Grundkörpers (16) der Klammer (10) für jede einzelne Verriegelungsrippe (22) eine eigene Durchtrittsöffnung (18) ausgebildet ist.

5. Montagesystem nach Anspruch 4, **dadurch gekennzeichnet, dass** die Durchtrittsöffnungen (18) in den Schlitzen (14) des Grundkörpers (16) von Stützrippen (17) und einem Quersteg (19) begrenzt sind.

6. Montagesystem nach einem der vorhergehenden Ansprüche, **dadurch gekennzeichnet, dass** die Verriegelungsrippen (22) der Blende (20) zur Innenseite (27) abgerundet sind.

7. Montagesystem nach einem der vorhergehenden Ansprüche, **dadurch gekennzeichnet, dass** die Klemmschenkel (11) und das Halteprofil (15) der Klammer (10) einen Aufnahmebereich (12) zur Befestigung des Kanalunterteils (30) bilden.

8. Montagesystem nach einem der vorhergehenden Ansprüche, **dadurch gekennzeichnet, dass** die seitlichen Klemmschenkel (11) der Klammer (10) zackenförmig ausgestaltet sind.

## Claims

1. Assembly system for preventing displacement and for covering cut-out sections of upper parts (31) and electric installation devices (32) in cable guide channels, consisting of
- a clamp (10) with a base body (16), lateral holding strips (15) for latching onto a channel lower part (30) and lateral clamping arms (11) for fastening a panel (20),
- a panel (20) with a cover plate (21) and lateral locking ribs (22) arranged opposing, which cooperate with the clamping arms (11) of the base body (16) of the clamp (10),
wherein at least two slots (14) spaced apart from one another in parallel are formed on the base body (16) to receive the locking ribs (22) in two different locking positions, which are separated from one another by support ribs (17), **characterised in that** an outwardly pointing notch (23) is formed on the lower end of the locking ribs (22) of the panel (20) and a locking profile (13), which can be latched in the notch (23), is formed on the lower side of the clamping arm (11) of the clamp (10), **in that** the locking ribs (22) of the panel (20) are arranged offset on the lower side of the cover plate (21), so a larger overhang (25) is produced on the end face on the one side and a smaller overhang (26) is produced on the opposing side and **characterised in that** the lateral clamping arms (11) of the clamp (10) are resilient.

2. Assembly system according to claim 1, **characterised in that** the locking ribs (22) on the lower side of the cover plate (21) of the panel (20) are connected to one another by a web (24).

3. Assembly system according to any one of the preceding claims, **characterised in that** three slots (14), which are spaced apart from one another in parallel and are separated from one another by support ribs (17), are arranged on the base body (16) of the clamp (10).

4. Assembly system according to any one of the preceding claims, **characterised in that** a through-opening (18) of its own is formed in the slots (14) of the base body (16) of the clamp (10) for each individual locking rib (22).

5. Assembly system according to claim 4, **characterised in that** the through-openings (18) in the slots (14) of the base body (16) are limited by support ribs (17) and a transverse web (19).

6. Assembly system according to any one of the preceding claims, **characterised in that** the locking ribs (22) of the panel (20) are rounded to the inside (27).

7. Assembly system according to any one of the preceding claims, **characterised in that** the clamping arms (11) and the holding profile (15) of the clamp (10) form a receiving region (12) for fastening the channel lower part (30).

8. Assembly system according to any one of the preceding claims, **characterised in that** the lateral clamping arms (11) of the clamp (10) are zigzag-shaped.

## Revendications

1. Système de montage destiné à empêcher le déplacement et à recouvrir les découpes de parties supérieures (31) et d'appareils d'installation électrique (32) dans des caniveaux de câblage, constitué
- d'une pince (10) avec un corps de base (16), des barrettes de maintien latérales (15) pour s'enclencher sur une partie inférieure de caniveau (30) et des branches de serrage latérales (11) pour la fixation d'un cache (20),
- d'un cache (20) avec une plaque de recouvrement (21) et des nervures de verrouillage latérales (22) disposées en vis-à-vis, qui coopèrent avec les branches de serrage (11) du corps de base (16) de la pince (10), sachant qu'au moins deux fentes (14) mutuellement distantes en parallèle sont formées sur le corps de base (16) pour recevoir les nervures de verrouillage (22) dans deux positions de verrouillage différentes, fentes qui sont séparées les unes des autres par des nervures de soutien (17),
**caractérisé en ce qu'**une entaille (23) dirigée vers l'extérieur est formée à l'extrémité inférieure des nervures de verrouillage (22) du cache (20) et un profil de verrouillage (13) qui peut être enclenché dans l'entaille (23) est formé sur le côté inférieur de la branche de serrage (11) de la pince (10),
**en ce que** les nervures de verrouillage (22) du cache (20) sont disposées de manière décalée sur le côté inférieur de la plaque de recouvrement (21), de sorte que, frontalement, un porte-à-faux plus grand (25) est créé sur un côté et un porte-à-faux plus petit (26) sur le côté opposé,
et **en ce que** les branches de serrage latérales (11) de la pince (10) sont réalisées à effet de ressort.

2. Système de montage selon la revendication 1, **caractérisé en ce que** les nervures de verrouillage (22) sont mutuellement reliées par l'intermédiaire d'une entretoise (24) sur le côté inférieur de la plaque de recouvrement (21) du cache (20).

3. Système de montage selon l'une des revendications précédentes, **caractérisé en ce que** trois fentes (14) mutuellement distantes en parallèle, qui sont séparées les unes des autres par des nervures de soutien (17), sont disposées sur le corps de base (16) de la pince (10).

4. Système de montage selon l'une des revendications précédentes, **caractérisé en ce qu'**une propre ouverture de passage (18) est formée pour chaque nervure de verrouillage individuelle (22) dans les fentes (14) du corps de base (16) de la pince (10).

5. Système de montage selon la revendication 4, **caractérisé en ce que** les ouvertures de passage (18) dans les fentes (14) du corps de base (16) sont délimitées par des nervures de soutien (17) et une entretoise transversale (19).

6. Système de montage selon l'une des revendications précédentes, **caractérisé en ce que** les nervures de verrouillage (22) du cache (20) sont arrondies vers le côté intérieur (27).

7. Système de montage selon l'une des revendications précédentes, **caractérisé en ce que** les branches de serrage (11) et le profil de maintien (15) de la pince (10) forment une région réceptrice (12) pour la fixation de la partie inférieure de caniveau (30).

8. Système de montage selon l'une des revendications précédentes, **caractérisé en ce que** les branches de serrage latérales (11) de la pince (10) sont réalisées en forme de fourchons.
